Europäisches Patentamt

European Patent Office

Office européen des brevets

(19)

(11) Numéro de publication : **0 037 351**
**B1**

(12)

# FASCICULE DE BREVET EUROPÉEN

(45) Date de publication du fascicule du brevet :
25.07.84

(21) Numéro de dépôt : 81420043.2

(22) Date de dépôt : 24.03.81

(51) Int. Cl.³ : **F 16 L 37/00**, F 16 L 37/12,
**H 01 R 13/629**

(54) Perfectionnements aux raccords multiples pour la jonction simultanée de plusieurs canalisations pneumatiques ou hydrauliques.

(30) Priorité : 25.03.80 FR 8007625

(43) Date de publication de la demande :
07.10.81 Bulletin 81/40

(45) Mention de la délivrance du brevet :
25.07.84 Bulletin 84/30

(84) Etats contractants désignés :
CH DE GB LI SE

(56) Documents cités :
FR-A- 863 656
FR-A- 2 153 861
FR-A- 2 344 201
FR-A- 2 385 239
GB-A- 930 406
US-A- 2 987 693

(73) Titulaire : **S.A. DES ETABLISSEMENTS STAUBLI
(France)**
**B.P. 20**
**F-74210 Faverges (FR)**

(72) Inventeur : **Burquier, Jean-Luc**
**Les Presles Menthon Saint Bernard**
**F-74290 Veyrier du Lac (FR)**

(74) Mandataire : **Monnier, Guy et al**
**Cabinet Monnier 142-150 Cours Lafayette**
**F-69003 Lyon (FR)**

## Description

La présente invention a trait aux raccords multiples utilisés pour la jonction simultanée de plusieurs canalisations parcourues par des gaz ou liquides.

On sait que les dispositifs de ce type comprennent généralement deux plaques séparées sur chacune desquelles sont fixés les éléments, mâles pour l'une, femelles pour l'autre, d'un nombre de raccords élémentaires correspondant à celui des canalisations à raccorder simultanément. Ces plaques sont équipées d'au moins un dispositif de manœuvre à came ou à crémaillère, agencé de manière à opérer le rapprochement ou l'éloignement à force desdites plaques en surmontant de la sorte la résistance exercée par le joint d'étanchéité et les ressorts de rappel associés aux clapets automatiques des différents raccords élémentaires.

Il y a bien entendu lieu de faire comporter aux plaques des moyens de verrouillage propres à les maintenir positivement en position assemblée. Dans les constructions connues ce verrouillage est généralement assuré par les verrous portés par les raccords élémentaires, ces verrous étant automatiquement commandés à la libération lors de la dissociation des deux plaques sous l'effet du dispositif de manœuvre. On conçoit qu'un tel agencement alourdit le raccord multiple dont il augmente également le coût.

On connaît déjà un raccord multiple correspondant au préambule de la revendication 1, voir FR-A-2 153 861. Dans le raccord décrit le dispositif de manœuvre destiné à opérer le rapprochement et l'écartement à force des deux plaques qui portent les éléments mâles et femelles des raccords élémentaires comprend d'une part un arbre monté sur l'une desdites plaques et pourvu de deux pignons coopérant, sous l'effet d'un déplacement angulaire imparti à l'arbre précité par une poignée d'actionnement, avec une denture ménagée sur deux colonnes prévues sur la seconde plaque, et d'autre part un mécanisme de verrouillage qui assure le blocage des deux plaques à la position rapprochée de raccordement.

La présente invention a plus spécialement pour but de permettre la réalisation d'un raccord multiple du genre sus-mentionné qui soit de construction plus simple et moins coûteuse que les appareillages classiques.

Un autre but de l'invention consiste à faire comporter à la poignée ou autre organe d'actionnement du dispositif de manœuvre un mécanisme de retenue s'opposant efficacement à toute manipulation intempestive au déverrouillage.

L'invention telle qu'elle est caractérisée dans la revendication 1, résout ces problèmes. Des modes particuliers de réalisation de l'invention apparaissent dans les revendications dépendantes.

Le dessin annexé, donné à titre d'exemple, permettra de mieux comprendre l'invention, les caractéristiques qu'elle présente et les avantages qu'elle est susceptible de procurer :

Figure 1 est une coupe horizontale de l'une des deux extrémités d'un raccord multiple établi conformément à l'invention.

Figures 2 à 4 sont des coupes suivant les plans respectivement indiqués en II-II, III-III et IV-IV (fig. 1) ; sur la coupe de fig. 4 on a rappelé en I-I le plan de coupe de fig. 1.

Figures 5 et 6 reproduisent fig. 3, respectivement fig. 4, à une autre position.

Figure 7 est une vue de côté illustrant une variante de réalisation du mécanisme de retenue associé à la poignée d'actionnement de l'un des deux dispositifs de manœuvre du raccord multiple suivant l'invention.

Figure 8 est une vue en plan avec arrachement illustrant une autre variante du mécanisme de retenue.

Figure 9 est une coupe suivant le plan indiqué en IX-IX en fig. 8.

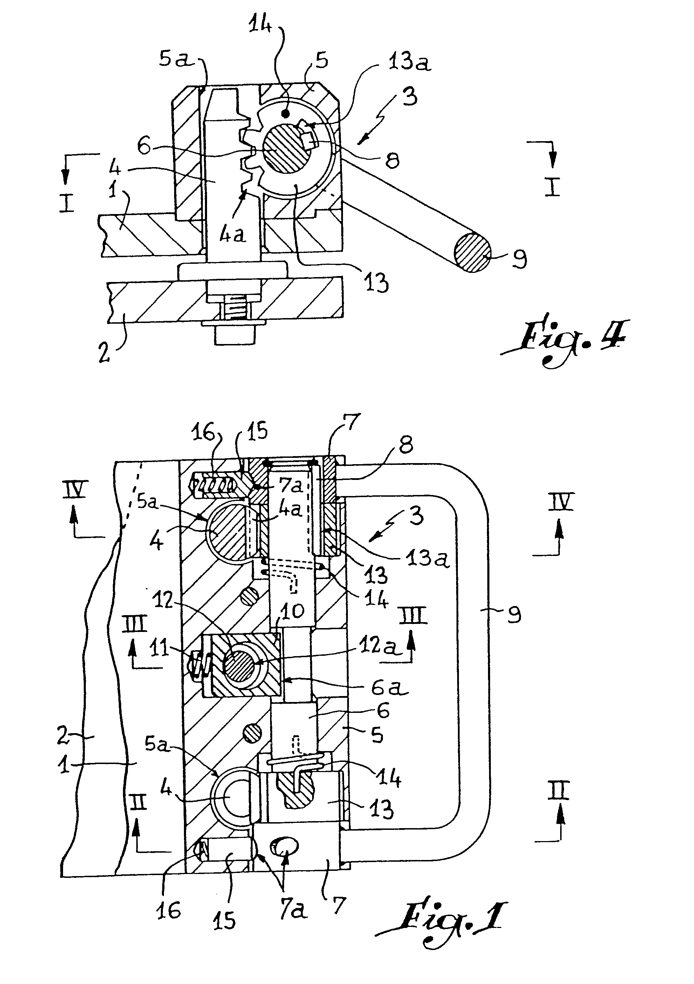

Dans la description qui va suivre on a supposé que l'invention était appliquée aux raccords multiples du genre dans lequel les plaques indépendantes 1 et 2 qui portent les deux séries d'éléments mâles et femelles des raccords élémentaires étaient assemblées et dissociées à l'aide de deux dispositifs de manœuvre identiques prévus le long des bords transversaux opposés des plaques précitées. En fig. 1 l'on n'a représenté qu'un seul de ces deux dispositifs, celui-ci ayant été globalement référencé 3.

Ce dispositif de manœuvre 3 comprend deux colonnes 4 dont la base est solidaire de la plaque inférieure 2 tandis que leur côté tourné en direction du bord transversal correspondant de ladite plaque est découpé pour former une crémaillère 4a débouchant au sommet de la colonne considérée. Chacun des bords transversaux de la plaque supérieure 1 est pourvu d'un petit bâti 5 tourné vers le haut et percé verticalement en 5a pour l'engagement des deux colonnes correspondantes 4.

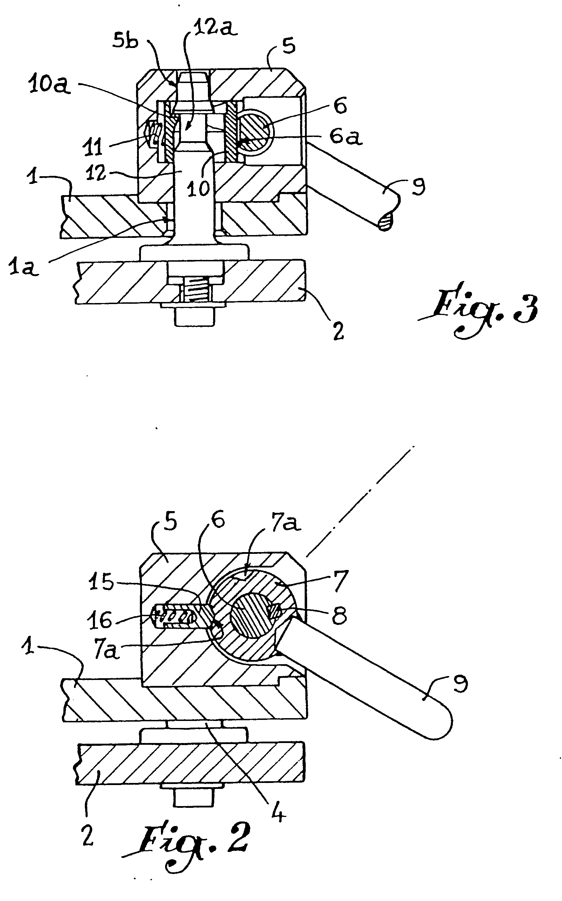

Chaque dispositif de manœuvre 3 comprend également un arbre de commande 6 monté longitudinalement dans le bâti 5. Comme montré en fig. 1 et 2, cet arbre 6 est rendu solidaire, au niveau de chacune de ses extrémités, d'une bague 7 calée sur l'extrémité considérée à l'aide d'une clavette 8. Les deux bagues 7 sont reliées l'une à l'autre par une poignée 9 en forme d'anse, si bien que la manœuvre angulaire de chaque anse 9 du raccord multiple provoque la rotation de l'arbre 6.

En son centre l'arbre 6 présente une partie à diamètre réduit qui est en outre taillée pour déterminer un méplat 6a (fig. 1, 3 et 5). Ce méplat 6a est destiné à la commande d'un verrou 10 de forme cylindrique à axe vertical, monté à coulissement horizontal dans une cavité du bâti 5 envisagé. Ce verrou 10 reçoit l'action d'un ressort latéral 11 qui tend élastiquement à engager une dent 10a à l'intérieur d'une dépression annulaire 12a ménagée dans une chandelle 12. Cette dernière est portée par la partie centrale de la plaque 2 et l'on comprend que lorsque les deux chandelles 12 de la plaque 2 s'engagent dans les perforations 1a de la plaque 1 et 5b des deux bâtis 5, l'extrémité de chacune desdites chandelles repousse le verrou correspondant 10 qui sous l'effet du ressort 11 vient élastiquement introduire sa dent 10a dans la dépression 12a. Le verrouillage des deux plaques est ainsi rendu automatique.

On comprend par ailleurs que si l'on déplace angulairement chaque arbre 6 à l'aide de la poignée 9 correspondante, le méplat 6a, jusqu'alors appliqué à plat contre la paroi extérieure du verrou 10 considéré, repousse ce dernier à l'encontre du ressort 11. La dent 10a est ainsi extraite de la dépression 12a et permet en conséquence le retrait de la chandelle 12 et la dissociation des deux plaques 1 et 2.

Chaque dispositif de manœuvre 3 comprend enfin deux cames dentées 13 (fig. 1, 4 et 6) établies pour coopérer avec la crémaillère 4a des colonnes 4. Chacune de ces cames ou pignons 13 est rendu solidaire de l'arbre 6 par la clavette 8 qui assure le calage de la bague 7 adjacente, étant noté que la partie de cette clavette 8 qui correspond à l'ouverture centrale du pignon 13 est engagée dans une lumière arquée 13a de ladite ouverture. On conçoit dans ces conditions que par suite du jeu angulaire dont dispose la clavette 8 par rapport à son pignon 13, ce dernier n'est pas immédiatement déplacé angulairement lorsque l'arbre 6 commence à tourner sous l'effet de la rotation de la poignée 9.

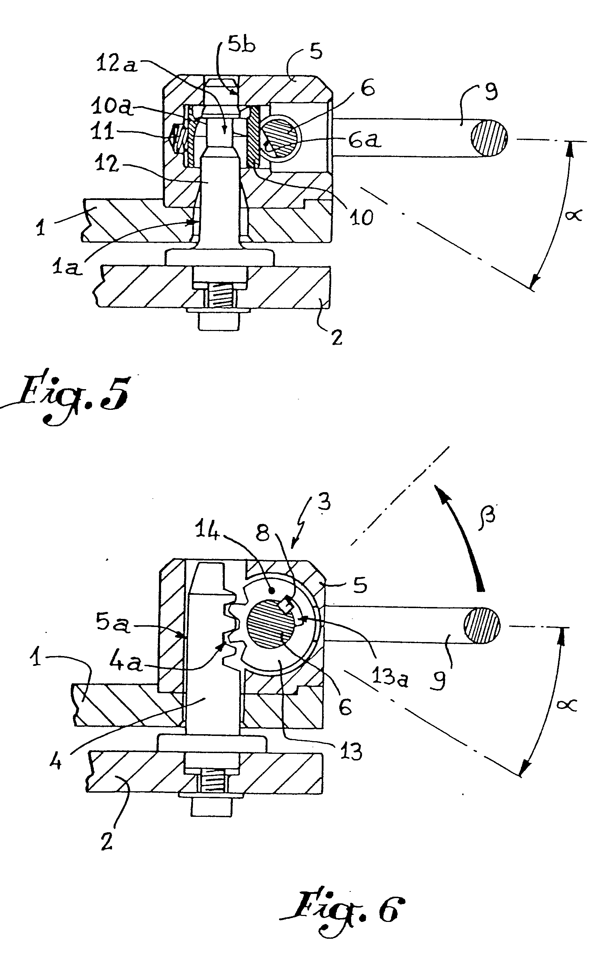

Il convient de remarquer qu'à chaque came ou pignon 13 est associé un ressort de torsion 14 (fig. 1 et 4) dont une extrémité est fixée au bâti 5 tandis que l'extrémité opposée est rendue solidaire du pignon considéré. Celui-ci est donc élastiquement ramené et retenu à une position angulaire donnée par rapport à l'arbre 6 ; les choses sont agencées pour que cette position angulaire soit celle illustrée en fig. 4, pour laquelle la clavette 8 reçoit l'appui de la paroi latérale de la lumière 13a qui est tournée vers le bas.

En conséquence, lorsque l'utilisateur superpose les deux plaques 1 et 2 en vue du raccordement des canalisations branchées sur les raccords élémentaires, la rotation des pignons 13 qui coopèrent avec la crémaillère 4a des colonnes 4 s'effectue suivant un angle correspondant à l'amplitude angulaire de la lumière arquée 13a, sans abaissement des poignées 9 ; cet angle correspond au rapprochement manuel des deux plaques 1 et 2. Puis l'abaissement à force des poignées 9 assure le serrage des plaques précitées et leur verrouillage. On se trouve alors à la position illustrée en fig. 2, 3 et 4.

Pour dissocier les plaques du raccord multiple, l'opérateur relève angulairement chaque poignée 9. Pendant la première partie de cette course (angle α de fig. 5 et 6) les pignons ou cames 13 restent immobiles par suite du jeu de la clavette 8 dans la lumière arquée 13a alors que la rotation de l'arbre 6 opère la commande du verrou 10 : les deux plaques 1 et 2 ne sont plus verrouillées. Par contre lors de la partie β (fig. 6) de la course, les clavettes 8 entraînent les pignons 13 avec l'arbre 6, de telle sorte que les deux plaques sont écartées l'une de l'autre.

On doit cependant considérer le risque pour qu'à la position verrouillée de fig. 2, 3 et 4, l'une ou l'autre des deux poignées 9 du raccord multiple soit intempestivement manœuvrée au déverrouillage. En vue d'éviter une telle éventualité l'invention prévoit de faire comporter à chaque dispositif de manœuvre 3 un mécanisme de retenue.

En fig. 1 et 2 ce mécanisme est constitué par un doigt 15 associé à chacune des bagues 7. Un ressort 16 tend à repousser élastiquement ce doigt 15 pour que son extrémité s'engage dans l'une ou l'autre des deux dépressions 7a pratiquées dans la périphérie de la bague 7 correspondante.

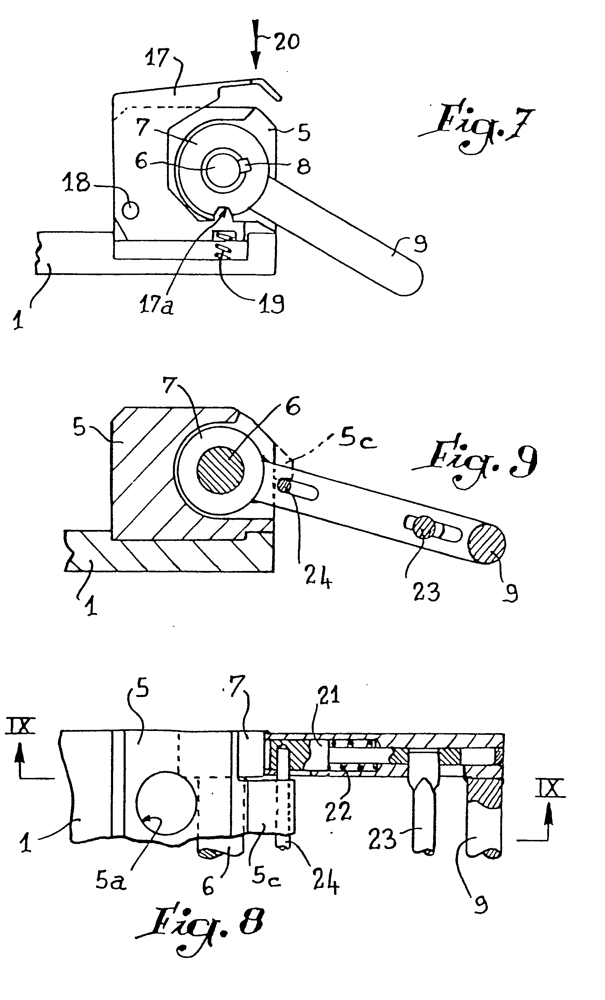

Lorsqu'un tel freinage élastique n'est pas jugé suffisant, on peut avoir recours à la forme de réalisation illustrée en fig. 7. L'organe de retenue est ici constitué par un étrier 17 qui recouvre le dessus de chaque bâti 5 et dont les branches latérales repliées sont articulées en 18 sur ledit bâti. Deux ressorts inférieurs 19 tendent à maintenir l'étrier 17 en position haute pour laquelle un bossage vertical 17a de chaque branche vient s'engager dans une entaille correspondante de chacune des bagues 7.

Ces bagues 7 sont ainsi retenues positivement à l'encontre de toute rotation. Une pression verticale (flèche 20) sur l'étrier 17 lors de la manœuvre de la poignée correspondante 9 permet de libérer ces bagues et l'arbre 6 pour la dissociation des deux plaques 1 et 2.

En variante on peut encore avoir recours à l'agencement suivant fig. 8 et 9. Chacune des branches latérales, prévues creuses, de chaque poignée 9 renferme un poussoir 21 associé à un ressort de rappel 22. Les deux poussoirs 21 sont reliés transversalement l'un à l'autre par deux tiges 23 et 24 qui traversent des lumières allongées des branches précitées pour s'étendre parallèlement à la partie centrale de la poignée 9. Les ressorts 22 tendent élastiquement à maintenir la tige 24 au-dessous d'un bec 5c du bâti 5 en interdisant l'élévation de la poignée 9, si bien que l'utilisateur doit actionner la tige 23 au retrait lorsqu'il désire manœuvrer la poignée précitée.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

**Revendications**

1. Raccord multiple pour la jonction simultanée de plusieurs canalisations, du genre dans lequel le dispositif de manœuvre (3) destiné à opérer le rapprochement et l'écartement à force des deux plaques (1, 2) qui portent les éléments mâles et femelles des raccords élémentaires comprend d'une part un arbre (6) monté sur l'une (1) desdites plaques et pourvu de deux pignons ou cames (13) coopérant, sous l'effet d'un déplacement angulaire imparti à l'arbre précité par une poignée d'actionnement (9), avec une denture (4a) ménagée sur deux colonnes (4) prévues sur la seconde plaque (2), et d'autre part un mécanisme de verrouillage qui assure le blocage des deux plaques à la position rapprochée de raccordement, caractérisé en ce que le mécanisme de verrouillage comporte un verrou chargé (10) qui coopère avec une chandelle (12) solidaire de la seconde plaque (2) et qui est commandé à la libération par une partie (6a) de l'arbre (6) du dispositif (3) à l'encontre des moyens élastiques de rappel (11), chacun des pignons (13) disposant d'une certaine liberté angulaire sur ledit arbre (6) de façon à ce que la commande du verrou (10) à la libération puisse intervenir avant que les pignons (13) se soient déplacés angulairement pour écarter les deux plaques (1, 2).

2. Raccord multiple suivant la revendication 1, caractérisé en ce que chaque pignon ou came (13) est sollicité élastiquement par des moyens élastiques (14) qui tendent à le ramener et à le maintenir à une position déterminée sur l'arbre (6).

3. Raccord multiple suivant l'une quelconque des revendications 1 et 2, caractérisé en ce que chaque pignon ou came (13) est monté sur l'arbre (6) par le moyen d'une clavette (8) engagée dans une lumière (13a) à profil arqué ménagée dans l'ouverture centrale dudit pignon.

4. Raccord multiple suivant l'une quelconque des revendications 1 à 3, du genre dans lequel le dispositif de manœuvre comprend des moyens pour assurer la retenue de la poignée d'actionnement (9) à la position rapprochée des plaques, caractérisé en ce que les moyens de retenue sont constitués par un étrier (17) monté à basculement sur le bâti (5) du dispositif de manœuvre (3) et associé à des moyens élastiques (19) qui tendent à engager deux bossages latéraux (17a) à l'intérieur d'entailles pratiquées dans la périphérie des bagues (7) qui assurent la fixation de la poignée (9) sur l'arbre (6).

5. Raccord multiple suivant l'une quelconque des revendications 1 à 3, du genre dans lequel le dispositif de manœuvre comprend des moyens pour assurer la retenue de la poignée d'actionnement à la position rapprochée des plaques, caractérisé en ce que les moyens de retenue comprennent deux tiges parallèles (23, 24) portées par des poussoirs (21) logés dans les branches creuses de la poignée (9), l'une (24) desdites tiges venant s'engager au-dessous d'un bec (5c) sous l'effet des moyens élastiques (22) associés aux poussoirs précités tandis que l'autre (23) fait fonction d'organe de commande.

**Claims**

1. Multiple coupling for simultaneously joining several pipes, of the type in which the manipulating device (3) intended to operate the drawing together and the parting by force of the two plates (1, 2) which carry the male and female elements of the elementary couplings comprises on the one hand a shaft (6) mounted on one (1) of the said plates and provided with two pinions or cams (13) which cooperate, under the effect of an angular displacement imparted to the above-mentioned shaft by an actuating handle (9), with teeth (4a) arranged on two columns (4) provided on the second plate (2), and which comprises on the other hand a locking mechanism which ensures the clamping of the two plates in the united position of coupling, characterized in that the locking mechanism comprises a loaded bolt (10) which cooperates with an upright (12) which is integral with the second plate (2) and which is operated to release by a part (6a) of the shaft (6) of the device (3) in opposition to the elastic return means (11), each of the pinions (13) having a certain angular freedom on the said shaft (6) so that the operation of the bolt (10) to release can intervene before the pinions (13) are displaced angularly to part the two plates (1, 2).

2. Multiple coupling according to Claim 1, characterized in that each pinion or cam (13) is acted upon elastically by elastic means (14) which conduce to return it and maintain it at a particular position on the shaft (6).

3. Multiple coupling according to any one of Claims 1 and 2, characterized in that each pinion or cam (13) is mounted on the shaft (6) by means of a pin (8) engaged in a hole (13a) of curved profile, which is arranged in the central opening of the said pinion.

4. Multiple coupling according to any one of Claims 1 to 3, of the type in which the manipulating device comprises means to ensure that the actuating handle (9) is retained in the united position of the plates, characterized in that the retaining means are constituted by a stirrup (17) mounted so as to tilt over the frame (5) of the manipulating device (3) and associated with elastic means (19) which conduce to engage two lateral bosses (17a) on the interior of slots cut in the periphery of the rings (7) which ensure that the handle (9) is fixed in place on the shaft (6).

5. Multiple coupling according to any one of Claims 1 to 3, of the type in which the manipulating device comprises means to ensure that the actuating handle is retained in the united position of the plates, characterized in that the retaining means comprise two parallel rods (23, 24) carried by pushes (21) housed in the hollow branches of the handle (9), one (24) of the said rods coming to engage beneath a protuberance (5c) under the effect of the elastic means (22) associated with the above-mentioned pushes, whilst the other (23) serves as operating member.

**Ansprüche**

1. Vielfachkupplung für die gleichzeitige Verbindung von mehreren Leitungen, bei welcher eine Betätigungsvorrichtung (3) zum gewaltsamen Zusammenführen und Auseinanderrücken zweier die einander komplementären Anschlußelemente der einzelnen Leitungen tragende Platten (1, 2) eine an einer (1) der Platten gelagerte Welle (6) mit zwei darauf angeordneten Ritzeln oder Kämmgliedern (13), welche unter Einwirkung einer der Welle mittels eines Betätigungshandgriffs (9) erteilten Winkelbewegung jeweils mit einer Verzahnung (4a) an zwei an der anderen Platte (2) angebrachten Bolzen (4) zusammenwirken, sowie ferner einen Verriegelungsmechanismus aufweist, welcher die beiden Platten in der einander angenäherten Verbindungsstellung sichert, dadurch gekennzeichnet, daß der Verriegelungsmechanismus einen belasteten Riegel (10) aufweist, welcher mit einem fest mit der zweiten Platte (2) verbundenen Zapfen (12) zusammenwirkt und mittels eines Teiles (6a) der Welle (6) der Betätigungsvorrichtung (3) gegen die von einer elastischen Rückstelleinrichtung (11) ausgeübte Belastung freigebend betätigbar ist, und daß jedes Ritzel (13) um einen gewissen Winkel auf der Welle (6) verdrehbar ist, so daß die freigebende Betätigung des Riegels (10) bewerkstelligbar ist, bevor die Ritzel (13) zum Auseinanderdrücken der beiden Platten (1, 2) verdreht werden.

2. Vielfachkupplung nach Anspruch 1, dadurch gekennzeichnet, daß jedes Ritzel oder Kämmglied (13) durch elastische Einrichtungen (14) belastet ist, welche es in eine vorbestimmten Stellung auf der Welle (6) zu führen und darin zu halten bestrebt sind.

3. Vielfachkupplung nach einem der Ansprüche 1 oder 2, dadurch gekennzeichnet, daß jedes Ritzel oder Kämmglied (13) auf der Welle (6) mittels eines Keils (8) befestigt ist, welcher in einer ein bogenförmiges Profil aufweisenden Aussparung (13a) an der Mittelbohrung des Ritzels angeordnet ist.

4. Vielfachkupplung nach einem der Ansprüche 1 bis 3, bei welcher die Betätigungsvorrichtung Einrichtungen zum Festhalten des Betätigungshandgriffs (9) in der einander angenäherten Stellung der Platten aufweist, dadurch gekennzeichnet, daß die Halteeinrichtung einen schwenkbar am Rahmen (5) der Betätigungsvorrichtung (3) gelagerten Bügel (17) aufweist, welcher durch eine elastische Einrichtung (19) in eine Stellung belastet ist, in welcher zwei seitlich daran hervorstehende Vorsprünge (17a) in Eingriff mit im Umfang von der Befestigung des Handgriffs (9) auf der Welle (6) dienenden Ringen (7) geformten Ausschnitten kommen.

5. Vielfachkupplung nach einem der Ansprüche 1 bis 3, bei welchem die Betätigungsvorrichtung eine Einrichtung zum Festhalten des Betätigungshandgriffs in der einander angenäherten Stellung der Platten aufweist, dadurch gekennzeichnet, daß die Halteeinrichtung zwei parallele Bolzen (23, 24) aufweist, welche von in einem hohlen Schaft des Handgriffs (9) angeordneten Stößeln (21) getragen sind und von denen der eine unter Einwirkung von den Stößeln zugeordneten elastischen Einrichtungen (22) eine Nase (5') untergreift, während der andere Bolzen (23) als Betätigungsglied dient.

Fig. 4

Fig. 1

*Fig. 3*

*Fig. 2*

*Fig. 5*

*Fig. 6*

*Fig. 7*

*Fig. 9*

*Fig. 8*